# EUROPÄISCHE PATENTSCHRIFT

(11) **EP 2 201 427 B1**
(45) Veröffentlichungstag und Bekanntmachung des Hinweises auf die Patenterteilung: **05.04.2017**
(21) Anmeldenummer: 08785848.6
(22) Anmeldetag: 03.09.2008
(51) Int. Cl.: G03H 1/20, G03H 1/26, B24D 15/10

(54) **VERFAHREN UND VORRICHTUNG ZUM HERSTELLEN FARBIGER INDIVIDUALISIERTER HOLOGRAMME**
METHOD AND DEVICE FOR PRODUCING COLORED INDIVIDUALIZED HOLOGRAMS
PROCÉDÉ ET DISPOSITIF DE FABRICATION D'HOLOGRAMMES EN COULEURS INDIVIDUALISÉS

(30) Priorität: 04.09.2007 DE 102007042386
(43) Veröffentlichungstag der Anmeldung: 30.06.2010
(73) Patentinhaber: Bundesdruckerei GmbH, 10969 Berlin (DE)
(72) Erfinder: LEOPOLD, André, 10119 Berlin (DE); KUNATH, Christian, 12203 Berlin (DE); EHREKE, Jens, 12587 Berlin (DE); HOCHENBLEICHER, Gerhard, 82256 Fürstenfeldbruck (DE); KLEPZIG, Christian, 81379 München (DE); LANGGASSNER, Michael, 85652 Pliening (DE)
(74) Vertreter: Patentanwälte Bressel und Partner mbB
(86) Internationale Anmeldenummer: PCT/EP2008/007406
(87) Internationale Veröffentlichungsnummer: WO 2009/030501

(56) Entgegenhaltungen:
- EP-A- 0 896 260
- DE-A1-102006 061 220

## Beschreibung

Die Erfindung betrifft ein Verfahren zum Herstellen farbiger individualisierter Hologramme, die insbesondere als Sicherheitselemente für Sicherheits- und/oder Wertdokumente verwendet werden, sowie eine Vorrichtung zum Herstellen von individualisierten Hologrammen.

Sicherheitselemente dienen dazu, ein Sicherheits- und/oder Wertdokument gegen Fälschung oder Kopieren zu sichern. Eine Art von Sicherheitselementen stellen Hologramme dar. In Sicherheitselementen sind oftmals auch individualisierende Angaben, beispielsweise Seriennummern, Ausweisnummern, biometrische Daten, Bilder (Passbilder), etc., enthalten. Diese können in Klarschrift bzw. Bildform oder optisch codiert bzw. maschinenlesbar vorgesehen sein.

Das grundsätzliche Vorgehen bei der Herstellung von Hologrammen mit individualisierenden Angaben ist beispielsweise in der Literaturstelle EP 0 896 260 A2 beschrieben. Die Grundzüge werden im Folgenden kurz erläutert. Zunächst wird ein holografischer Master mit einem Masterhologramm hergestellt. Dann wird der holografische Master hinter ein holografisches Aufzeichnungsmaterial positioniert, beispielsweise in flächigem Kontakt, ggf. getrennt durch eine Schutzfolie. Kohärentes Licht, beispielsweise aus einem Laser, wird auf die dem holografischen Master abgewandte Seite des holografischen Aufzeichnungsmaterials eingestrahlt, typischerweise mit definierter Wellenlänge und definiertem Inzidenzwinkel, nach Maßgabe des vom holografischen Master zu rekonstruierenden holografischen Musters. Es durchdringt das holografische Aufzeichnungsmaterial und wird vom Master gebeugt bzw. reflektiert, wobei sich das Hologramm durch Interferenz mit dem einfallenden Licht rekonstruiert und das Hologramm in dem holografischen Aufzeichnungsmaterial abbildet und durch photochemische- oder photophysikalische Prozesse im holografischen Aufzeichnungsmaterial speichert. Dabei kann der holografische Master so ausgelegt sein, dass er für mehrere Wellenlängen empfindlich ist und diese entsprechend beugt. Eine Individualisierung erfolgt über Modulation des verwendeten Lichts. Auch andere geometrische Anordnungen als die hier beschriebenen Anordnungen sind möglich.
Bei dem insofern bekannten Verfahren erfolgt eine farbige Belichtung unter Verwendung eines farbigen Spatial Light Modulators unter Beleuchtung mit einem Weißlichtlaser bzw. mit drei verschiedenfarbigen Lasern im üblichen Farbdreieck. Zur Herstellung eines Hologramms mit einem farbig rekonstruierenden holografischen Master erfolgt eine vollflächige Belichtung oder Belichtung mit einem Scanstrahl, wobei die Belichtung in geeigneter Weise moduliert wird, wie beispielsweise beim pixelweisen Schreiben oder linienweisem Schreiben. Das insofern bekannte Verfahren ist in der Ausführung komplex und benötigt entsprechend farbig modulierbare Spatial Light Modulatoren. Zudem ist die Beugungseffizienz pro Wellenlänge eher niedrig aufgrund der Überlagerung verschiedener Farben des Farbdreiecks an ein und denselben Orten bzw. in den Pixeln des Hologramms.

Aus der Praxis sind digitale Projektoren bekannt, welche mit Spatial Light Modulatoren in Form von Liquid Crystal Displays (LCD) arbeiten. Die Funktionsweise entspricht beispielsweise der Projektion eines Dias, wobei der Spatial Light Modulator anstelle des Dias tritt.

Aus der Praxis sind des Weiteren digitale Projektoren bekannt, welche ein DMD (Digital Micro Mirror Device) als Spatial Light Modulator umfassen. Das DMD wird sequenziell mit Teilbildern der jeweiligen Grundfarbe angesteuert und dem DMD ist ein rotierendes Farbrad mit abwechselnden Farbsegmenten in den Grundfarben nachgeschaltet. Dabei ist die Ansteuerung des DMD mit Teilbildern mit der Rotationsbewegung des Farbrades mit der Maßgabe synchronisiert, dass das DMD stets mit jenem Teilbild angesteuert wird, welches der Farbe des im Strahlengang befindlichen Farbsegmentes entspricht. Die Frequenz der Farbwechsel im Farbrad ist dabei ausreichend hoch, so dass das menschliche Auge keine Teilbilder unterscheiden kann, sondern die Teilbilder zu einem Gesamtbild zusammenfügt. In einer Variante wird mit drei DMDs, jeweils einem für eine Grundfarbe, gearbeitet, welche mit der jeweiligen Grundfarbe zugeordneten Teilbildern angesteuert werden.

Ebenfalls aus der Praxis sind Prototypen von Laserprojektoren bekannt, wobei das Licht von drei Lasern der drei Grundfarben mittels rotierender Spiegelräder, analog einem Elektronenstrahl einer Bildröhre, zeilenweise über eine Projektionsfläche gescannt wird.

Aus der Literaturstelle DE 2005 054 396 A1 ist der Einsatz eines Spatial Light Modulators in Form eines Digital Micro Mirror Device (DMD) zur Markierung von Gegenständen bekannt.

Allen dieser Verfahren, würden sie auf eine Belichtung zur Herstellung farbiger Hologramme angewandt, wären ebenfalls mit dem Nachteil behaftet, dass die Beugungseffizienz pro Wellenlänge auf Grund der Überlagerung verschiedener Farben des Farbdreiecks an ein und denselben Orten bzw. in den Pixeln des Hologramms eher niedrig ist.

In der DE 10 2006 061 220 A1, welche nach dem Prioritätstag dieser Anmeldung offengelegt wurde, ist ein Verfahren beschrieben, mit dem ein mehrfarbiges Hologramm herstellbar ist, dessen Pixel monochromatisch sind.

Technisches Problem der Erfindung.

Der Erfindung liegt das technische Problem zugrunde, ein verbessertes Verfahren und eine verbesserte Vorrichtung zum Herstellen farbiger Hologramme zu schaffen, die eine verbesserte spektrale Beugungseffizienz aufweisen und insbesondere eine Zeit sparende Herstellung gestatten.

### Definitionen

Ein Sicherheitselement ist eine bauliche Einheit, die zumindest ein Sicherheitsmerkmal umfasst. Ein Sicherheitselement kann eine selbstständige bauliche Einheit sein, die mit einem Sicherheits- und/oder Wertdokument verbunden, beispielsweise verklebt werden kann, es kann sich aber auch um einen integralen Bestandteil eines Sicherheits- und/oder Wertdokumentes handeln. Ein Beispiel für Erstes ist ein auf ein Sicherheits- und/oder Wertdokument aufklebbares Visum. Ein Beispiel für Letzteres ist ein in einen Geldschein oder einen Ausweis integriertes, beispielsweise einlaminiertes Hologramm.

Ein Sicherheitsmerkmal ist eine Struktur, die nur mit (gegenüber einfachem Kopieren) erhöhtem Aufwand oder gar nicht unautorisiert herstellbar bzw. reproduzierbar ist.

Ein Muster besteht typischerweise aus einer Vielzahl nebeneinander angeordneter Mustereinheiten bzw. Pixel. Die Mustereinheiten bzw. Pixel eines Muster sind einander zugeordnet und in definierter Weise lateral zueinander angeordnet, typischerweise in zwei Raumdimensionen, und ergeben in der Gesamtbetrachtung eine Darstellung, beispielsweise ein Bild, Symbol, Logo, einen Schriftzug (Buchstaben, Zahlen, alphanumerisch) oder Code (z.B. Barcode).

Im Rahmen der Terminologie der vorliegenden Darstellung der Erfindung ist der Begriff des Pixels im Rahmen eines Hologramms modifiziert verwendet. Während im Stand der Technik und der vorstehenden Beschreibung hierzu ein einziges Pixel jede beliebige Farbe, die sich aus den drei Grundfarben bilden lässt, haben kann, soll ein isoliertes Pixel im Rahmen der Erfindung nur eine einzige Farbe, nämlich die dem jeweiligen Pixel zugeordnete Farbe, aufweisen. Bezogen auf die Terminologie des Standes der Technik wäre ein Pixel im Sinne der Erfindung ein Subpixel und der Ausdruck des Pixels wird für die Erfindung zum Zwecke der Vereinfachung verwendet. Ein vollfarbiger Farbeindruck entsteht im Rahmen der Erfindung dadurch, dass die Dichte der erfindungsgemäßen Pixel so hoch ist, dass das menschliche Auge sie nicht unterscheiden kann und folglich aus unterschiedlichen Beugungseffizienzen bzw. "Helligkeiten" benachbarter Pixel mit verschiedenen Grundfarben die in dem betreffenden Bereich des Hologramms darzustellende Farbe gleichsam mischt. Ein erfindungsgemäßes Pixel hat eine Fläche von typischerweise im Bereich 1 *µ*m² bis 10⁶ *µ*m², insbesondere 10² *µ*m² bis 10⁵ *µ*m². Die Abwesenheit von Farbe meint, dass keine Farbe erkennbar ist. Ein erfindungsgemäßes Pixel, worin eine Farbe abwesend ist, kann beispielsweise schwarz, grau, weiß, oder transparent sein.

Als Sicherheits- und/oder Wertdokumente seien lediglich beispielhaft genannt: Personalausweise, Reisepässe, ID-Karten, Zugangskontrollausweise, Visa, Steuerzeichen, Tickets, Führerscheine, Kraftfahrzeugpapiere, Banknoten, Schecks, Postwertzeichen, Kreditkarten, beliebige Chipkarten und Haftetiketten (z.B. zur Produktsicherung). Solche Sicherheits- und/oder Wertdokumente weisen typischerweise ein Substrat, eine Druckschicht und optional eine transparente Deckschicht auf. Ein Substrat ist eine Trägerstruktur, auf welche die Druckschicht mit Informationen, Bildern, Mustern und dergleichen aufgebracht wird. Als Materialien für ein Substrat kommen alle fachüblichen Werkstoffe auf Papier- und/oder Kunststoffbasis in Frage.

Ein Spatial Light Modulator (SLM) erlaubt eine zweidimensional ortsaufgelöste Beleuchtung bzw. Bestrahlung eines meist flächigen Gegenstandes mit modulierter Intensität und/oder Phase. Hierbei kann es sich beispielsweise um einen DMD (Digital Micro Mirror Device) Chip, ein LCD (Liquid Crystal Display) Transmissionsdisplay oder ein LCoS (Liquid Crystal on Silicon) Display handeln. Allen ist gemeinsam, dass eine Vielzahl von SLM-Pixeln gebildet ist, wobei jedes SLM-Pixel unabhängig von anderen SLM-Pixeln aktivierbar oder deaktivierbar ist (auch Zwischenstufen sind möglich), wodurch durch entsprechende Ansteuerung der SLM-Pixel sich Muster oder Bilder projizieren lassen. Durch die freie Ansteuerbarkeit können auch ohne weiteres verschiedene Bilder oder Muster in zeitlicher Folge hintereinander generiert werden, beispielsweise in Form eines Passfotos.

Ein Code bzw. Muster ist individualisierend, wenn er einzigartig für eine Person oder einen Gegenstand oder eine Gruppe von Personen oder Gegenständen aus einer größeren Gesamtmenge an Personen oder Gegenständen ist. Ein für eine Gruppe von Personen innerhalb der Gesamtmenge der Einwohner eines Landes individualisierender Code ist beispielsweise die Stadt des Wohnortes. Ein für eine Person individualisierender Code ist beispielsweise die Nummer des Personalausweises oder das Passbild. Ein für eine Gruppe von Geldscheinen innerhalb der Gesamtmenge der Geldschiene individualisierender Code ist die Wertigkeit. Für einen Geldschein individualisierend ist die Seriennummer. Beispiele für nicht individualisierende Codes bzw. Muster sind Wappen, Siegel, Hoheitszeichen, etc. für Sicherheit oder Wertdokumente eines Hoheitsgebiets.

Ein holografisches Aufzeichnungsmaterial ist eine Schicht aus einem Material, welches photosensitiv ist, und in welcher sich Holografien durch irreversible, aber auch reversible photochemische und/oder photophysikalische Prozesse im Wege der Belichtung speichern lassen. Im Rahmen der Erfindung ist das eingesetzte Material irrelevant. Alle bekannten Materialien können eingesetzt werden, so dass auf die Fachliteratur des Durchschnittsfachmannes verwiesen werden kann. Lediglich beispielhaft seien die in der Holografie üblichen Photopolymere genannt.

Der Begriff der Farbe wird im Rahmen der Erfindung als eine Wellenlänge bzw. eine Spektrallinie verstanden. Mischfarben weisen mehrere verschiedene Wellenlängen bzw. Spektrallinien auf. Der Begriff der Farbe umfasst daher neben dem sichtbaren Bereich auch UV und IR. Als farbig wird eine Entität bezeichnet, wenn sie mehrere Farben umfasst oder ihr optischer Eindruck durch mehrere Farben (Wellenlängen) geprägt ist. Ein monochromatischer roter Laserstrahl wird in diesem Sinne nicht als farbig sondern als einfarbig angesehen.

Grundzüge der Erfindung und bevorzugte Ausführungsformen.

Es wird ein Verfahren vorgeschlagen, bei dem Licht mehrerer unterschiedlicher Farben (Wellenlängen) erzeugt wird, das Licht farbgetrennt individuell räumlich moduliert wird, das modulierte Licht optisch so geführt wird, das das Licht an einem holografischen Master zumindest teilweise gebeugt und/oder reflektiert wird und in dem einem holografischen Aufzeichnungsmaterial so mit dem modulierten nicht gebeugten und/oder reflektierten Licht überlagert wird, dass sich ein ein mehrfarbiges individualisiertes Hologramm repräsentierendes Interferenzmuster ausbildet und das mehrfarbige individualisierte Hologramm aufgenommen wird. Zur Lösung des Problems ist vorgesehen, dass das Licht mittels mehrerer Spatial Light Modulatoren farbgetrennt zeitgleich moduliert wird, wobei jeder der mehreren Farben des Lichts ein eigener Spatial Light Modulator zugeordnet ist, der einen einfarbigen Lichtstrahl der entsprechenden Farbe individuell moduliert, und die mehreren einfarbigen Lichtstrahlen der mehreren Farben vor dem Beugen und/oder Reflektieren an dem holografischen Master und dem Überlagern in dem holografischen Aufzeichnungsmaterial zu einem mehrfarbigen farbgetrennt individuell modulierten Belichtungslichtstrahl kollinear zusammengeführt werden, wobei die Spatial Light Modulatoren so zueinander angeordnet sind und die Strahlzusammenführung so ausgeführt wird, dass jedem der Pixel des individualisierten Hologramms genau eine der mehreren Farben (unabhängig von der Modulierung) zugeordnet ist. Unter einem mehrfarbigen Lichtstrahl wird ein Lichtstrahl verstanden, der Licht unterschiedlicher Farben (Wellenlängen) umfasst. Ein mehrfarbiger farbgetrennt individuell räumlich modulierter Lichtstrahl ist somit ein Lichtstahl, in dem die den einzelnen Farben zugeordneten Anteile jeweils unabhängig voneinander zur Individualisierung des Hologramms räumlich moduliert sind. Hierbei wird die Modulierung der einzelnen einfarbigen Lichtstrahlen gemäß den Farben zugeordneten Farbpixelmustern vorgenommen. Diese Farbpixelmuster sind in der Regel jedoch so gewählt, dass sie jeweils einen Farbanteil eines mehrfarbigen Gesamtmusters repräsentieren. Die Wahl der Farbpixelmuster und die Zusammenführung der individuell modulierten einfarbigen Lichtstrahlen erfolgt so, dass eine Abbildung des Zusammengeführten mehrfarbigen Belichtungslichtstrahls alle Farbpixelmuster in der Weise überlagert abbildet, dass sich die Pixel unterschiedlicher Farbpixelmuster nicht überlappen. Jedem Ort in der Abbildungsebene lässt sich somit genau einer der mehreren Farben (oder keiner Farben) zuordnen. Hierbei ist hervorzuheben, dass bei der Herstellung mehrerer verschiedener individualisierter mehrfarbiger Hologramme einander entsprechende Pixel dieser Hologramme nicht immer derselben Farbe zugeordnet sein müssen. Eine Zuordnung der Pixel in dem Gesamtmuster zu den Einzelnen der mehreren Farben wird vorzugsweise errechnet, um bei einem Betrachter einen bestimmten gewünschten Farbeindruck des Gesamtmusters hervorzurufen.

Erzeugt wird somit ein holografisches Sicherheitselement mit einem holografischen Aufzeichnungsmaterial, in welchem ein mehrfarbiges zweidimensionales (Gesamt)-Muster in Form eines Hologramms gebildet ist, wobei das (Gesamt)-Muster durch Pixel gebildet ist, wobei jedem Pixel ausschließlich eine von mehreren Farben zugeordnet ist, und wobei ein jedes Pixel entweder eine der mehreren Farben oder keine Farbe aufweisen kann. Für die Herstellung eines solchen mehrfarbigen holografischen Sicherheitselements, d.h. eines farbigen individualisierten Hologramms, wird eine Vorrichtung vorgeschlagen, umfassend eine Lichtquelle, die Licht mehrerer unterschiedlicher Farben (Wellenlängen) bereitstellt, eine Individualisierungseinheit, die das Licht farbgetrennt individuell räumlich moduliert, wobei das modulierte Licht optisch so geführt ist, das das modulierte Licht an einem holografischen Master zumindest teilweise gebeugt und/oder reflektiert wird und in dem einen holografischen Aufzeichnungsmaterial so mit dem modulierten nicht gebeugten und/oder reflektierten Licht überlagert ist, dass sich ein das mehrfarbige individualisierte Hologramm repräsentierendes Interferenzmuster ausbildet und das farbige individualisierte Hologramm gespeichert wird, wobei zur Lösung des technischen Problems vorgesehen ist, dass die Individualisierungseinheit mehrere Spatial Light Modulatoren, wobei jeder der mehreren Farben des Lichts ein eigener Spatial Light Modulator zugeordnet ist, und eine Zuführ- und Zusammenführoptik umfasst, wobei die zum Lenken einfarbiger Lichtstrahlen auf die den jeweiligen Farben zugeordneten Spatial Light Modulatoren, die die entsprechenden einfarbigen Lichtstrahlen gemäß entsprechender Farbpixelmuster zeitgleich individuell modulieren, und zum kollinearen Zusammenführen der einfarbigen modulierten Lichtstrahlen zu einem Belichtungslichtstrahl ausgebildet ist und die Spatial Light Modulatoren so zueinander ausgerichtet und angesteuert sind, dass die Strahlzusammenführung so ausgeführt ist, dass jedem der Pixel des individualisierten Hologramms genau eine der mehreren Farben oder keine Farbe (unabhängig von der Modulierung) zugeordnet ist. Die farbgetrennte, das heißt nach Farben getrennte, Individualisierung des mehrfarbigen Lichts erfolgt somit mittels mehrerer Spatial Light Modulatoren, die in einer Individualisierungseinheit zusammengefasst sind. Hierbei sind die Spatial Light Modulatoren vorzugsweise auf einer gemeinsamen Trägereinheit angeordnet. Die Spatial Light Modulatoren sind fest zu einander ausgerichtet. Es versteht sich jedoch, dass sie vorzugsweise mit Justiereinrichtungen versehen, bzw. auf solchen montiert sind, um eine Justage zu ermöglichen. Um eine Strahlzuführung zu den einzelnen Spatial Light Modulatoren zu gewährleisten und eine Zusammenführung der einzelnen einfarbigen individuell modulierten Lichtstrahlen zu einem Belichtungslichtstrahl in der Weise zu gewährleisten, dass in dem holografischen Aufzeichnungsmaterial abgebildete Pixel genau einer Farbe oder keiner Farbe zugeordnet sind, ist auch die Zuführ- und Zusammenführoptik in die Individualisierungseinheit aufgenommen. Vorzugsweise sind die optischen Elemente der Zuführ- und Zusammenführoptik auf derselben Trägereinheit angeordnet wie die Spatial Light Modulatoren. Die Trägereinheit kann vorzugsweise ein optischer Tisch sein. Es kann jedoch jede geeignet konstruktive Einheit verwendet werden, die den in der Präzisionsoptik üblichen Anforderungen entspricht. Die einzelnen Spatial Light Modulatoren können alle eine identische Pixelzahl und Pixelanordnung umfassen, insbesondere identisch ausgebildet sein. In einem solchen Fall ist es vorteilhaft, die einzelnen Spatial Light Modulatoren so auszurichten, dass die Farbmuster der einzelnen Spatial Light Modulatoren deckungsgleiche Pixelmuster in dem Hologramm erzeugen können. In einem solchen Fall ist eine Ansteuerungseinheit der Spatial Light Modulatoren vorgesehen, die sicherstellt, dass für jedes Pixel des farbigen Hologramms jeweils nur eine der Spatial Light Modulatoren (oder keine) das zugehörige Pixel zur individuellen Modulation des entsprechenden einfarbigen Lichtstahls nutzt.

Bei einer bevorzugten Ausführungsform sind die Spatial Light Modulatoren flächig ausgebildet. Dieses bietet den Vorteil, dass eine vollflächige Ausleuchtung des Hologramms möglich ist. Jedoch eignen sich flächig ausgebildete Spatial Light Modulatoren auch besonders gut für ein Verfahren, bei dem die Spatial Light Modulatoren zeitgleich in der Weise abgescannt werden, dass zueinander jeweils der gleiche Teilbereich des Gesamtmusters, d.h. den Farbpixelmuster, abgetastet und abgebildet werden. Flächig ausgebildete Spatial Light Modulatoren bieten für scannend arbeitende Verfahren den Vorteil, dass eine Synchronisation der Spatial Light Modulatoren mit den abscannenden einfarbigen Lichtstrahlen entfällt.

Besonders bevorzugt werden Spatial Light Modulatoren eingesetzt die ein Liquid-Crystal on Silicon (LCoS) sind. Die modulieren das Licht und reflektieren es zurück, hierbei wird die Polarisationsrichtung des modulierten Lichts geändert.

Bei Ausführungsformen, bei denen die Spatial Light Modulatoren scannend überstrichen werden, ist es vorteilhaft, wenn die Lichtquelle eine Mehrfarbenstreifenlichtquelle ist, die einen mehrfarbigen streifen- oder zeilenförmigen Lichtstrahl erzeugt. Eine solche Lichtquelle kann beispielsweise mehrere Lichteinzellichtquellen umfassen, deren einfarbige Lichtstrahlen zu einem mehrfarbigen Einfalllichtstahl, beispielsweise mittels dichroitischer Spiegel, zusammengeführt sind. Um eine Kollinearität der einfarbigen Lichtstrahlen zu gewährleisten, kann beispielsweise über eine Auskopplung beispielsweise an einem 4%-Reflex-Glasplättchen, ein Regelkreis ausgeführt werden, der mit Antriebselementen an den dichroitischen Spiegeln, die als Piezoantrieb ausgebildet sein können, eine Strahlqualität des mehrfarbigen Einfalllichtstrahls regelt. Alternativ kann die Lichtquelle mehrerer Einzellichtquellen umfassen, die unterschiedlichfarbige einfarbige, vorzugsweise streifen- oder zeilenförmige, Lichtstrahlen erzeugen, die nicht zusammengeführt sind.

Besonders bevorzugt ist vorgesehen, dass die Lichtquelle Licht dreier Farben erzeugt, die über additive Farbmischung Mischfarben erzeugen können, insbesondere Licht der Farben Rot, Blau und Grün. Hierüber wird es möglich vollfarbige individualisierte Hologramme herzustellen.

Die Zuführ- und Zusammenführoptik umfasst bei einer bevorzugten Ausführungsform dichroitische optische Elemente und polarisationsabhängige Strahlteiler. Je nach Ausgestaltung der Lichtquelle werden die optischen Elemente sowohl zur Strahl-Vereinzelung der in einem mehrfarbigen Einfalllichtstrahl enthaltenen Farben in einfarbige Lichtstrahlen, zum Führen der einfarbigen Lichtstrahlen auf die Spatial Light Modulatoren und zum Zusammenführen der individuell modulierten Lichtstrahlen zu einem mehrfarbigen Belichtungslichtstrahl verwendet. Vorzugsweise sind die dichroitischen optischen Elemente als dichroitische Filter ausgebildet, die jeweils eine Farbe und vorzugsweise 45° gegen eine Flächennormale reflektieren und die übrigen Farben transmittieren. Die polarisationsabhängigen Strahlteiler sind vorzugsweise als polarisierender Strahlteilerwürfel (PBS) ausgebildet.

Wichtig für die Ausgestaltung der Individualisierungseinheit ist es möglichst gleich lange Wegstrecken zwischen den Spatial Light Modulatoren und dem holografischen Aufzeichnungsmaterial und die einzelnen Pixel desselben Spatial Light Modulators als auch der unterschiedlichen Spatial Light Modulatoren zu realisieren, entlang derer das Licht geführt wird.

Ein besonders kompakter Aufbau der Individualisierungseinheit, der sowohl eine Auftrennung der Farben eines mehrfarbigen Einfalllichtstrahls als auch eine Zusammenführung ermöglicht, umfasst ein dichroitisches X-Prisma, wie es beispielsweise von der Firma Crystechcoating Inc., Shandong, China, erhältlich ist. Es umfasst im Innern zwei dichroitische gekreuzte Filter. Ein solches dichroitisches X-Prisma erlaubt die Aufspaltung eines an einer Vorderseite des würfelartig ausgebildeten X-Prismas einfallenden dreifarbigen Einfalllichtstrahls in drei einfarbige Lichtstrahlen. Einer von diesen einfarbigen Lichtstrahlen tritt an einer der Einfallsseite gegenüberliegenden Rückseite des X-Prismas aus, die anderen beiden einfarbigen Lichtstrahlen treten an einer rechten und linken Seite des X-Prismas aus, d.h. an den einander gegenüber liegenden Seiten, die zwischen der Vorderseite und der Rückseite angeordnet sind. Vor der linken Seite, der Rückseite und der rechten Seite ist vorzugsweise jeweils ein als LCoS ausgebildeter Spatial Light Modulator angeordnet. Das von den Spatial Light Modulatoren reflektierte und modulierte Licht wird in dem dichroitischen X-Prisma wieder zu einem mehrfarbigen modulierten Lichtstrahl zusammengeführt. Hierbei sind die auftretenden Lichtweglängen innerhalb einer so ausgestalteten Individualisierungseinheit jeweils gleich lang.

Eine zeitgleiche scannende, d. h. eine streifend abtastende, Strahlführung der einfarbigen Lichtstrahlen über die entsprechenden Spatial Light Modulatoren wird bei einer bevorzugten Ausführungsform durch eine translatorische Linearbewegung eines optischen Systems erreicht. Es ist somit bei solchen Ausführungsformen eine Translationseinheit vorgesehen, um ein optisches System linear in einer Richtung zu bewegen, um ein Abscannen aller Spatial Light Modulatoren durch die entsprechenden einfarbigen Lichtstrahlen zeitgleich zu bewirken. In einer besonders bevorzugten Ausführungsform ist das optische System die Individualisierungseinheit.

Bei einer anderen Ausführungsform ist vorgesehen, dass ein Abscannen der Spatial Light Modulatoren durch ein Schwenken eines Umlenkspiegels bewirkt wird, der um eine in der Spiegelebene liegende Speigeldrehachse drehbar ist. Vorzugsweise befindet sich die Drehachse in einem Brennpunkt einer Abbildungsoptik, die zwischen dem Spiegel und den auf einer Individualisierungseinheit angeordneten Spatial Light Modulatoren angeordnet ist. Nutzt man eine Individualisierungseinheit, die den Belichtungslichtstrahl entlang desselben Lichtwegs zurückführt, wie der Einfalllichtstrahl einfällt, kann der Umlenkspiegel auch verwendet werden, den Lichtstrahl auf das holografische Aufzeichnungsmaterial zu lenken. Bei einer solchen Ausführungsform ist ein Umlenkspiegel relativ zu der Individualisierungseinheit und dem Abbildungsmaterial angeordnet, der um eine in der Spiegelebene liegende Spiegeldrehachse drehbar gelagert ist, wobei das nicht modulierte Licht über den Umlenkspiegel auf die Individualisierungseinheit führbar ist und das modulierte Licht über den Umlenkspiegel auf das Abbildungsmaterial geführt ist, wobei eine Drehung des Umlenkspiegels ein Abscannen der Spatial Light Modulatoren bewirkt.

Bei einer Verwendung eines Umlenkspiegels treten unterschiedliche Weglängen für das Licht abhängig von der Position eines Pixels auf den Spatial Light Modulatoren auf. Um diese Wegunterschiede zu kompensieren, die zu Abbildungsunschärfen führen, ist bei einer Weiterbildung der Erfindung vorgesehen, dass beabstandet zu dem Umlenkspiegel ein Kompensationsspiegel so angeordnet ist, dass er gegenüber einer planparallelen Orientierung zu dem Umlenkspiegel in der Drehebene des Umlenkspiegels um einen festgelegten Relativwinkel verdreht ist und unter Beibehaltung des Abstands und des Relativwinkels gemeinsam mit dem Umlenkspiegel um dessen Speiegeldrehachse drehbar ist, wobei der mehrfarbige Einfalllichtstrahl über den Umlenkspiegel, den Kompensationsspiegel und eine Abbildungsoptik auf die Individualisierungseinheit gelenkt wird und der modulierte Belichtungslichtstrahl über die Abbildungsoptik, den Kompensationsspiegel und den Umlenkspiegel geführt wird.

Bei einer Ausführungsform ist der Umlenkspiegel als Hohlspiegel ausgebildet.

Bei Ausführungsformen, bei denen die Individualisierungseinheit den Belichtungslichtstrahl entlang des Weges des Einfalllichtstrahls zurückwirft, ist die Belichtungseinheit vorzugsweise gegenüberliegend zu dem holografischen Aufzeichnungsmaterial angeordnet. Eine Einkoppelung des Einfalllichtstahls in die Verbindungslinie der Individualisierungseinheit und des holografischen Belichtungsmaterials erfolgt bevorzugt über einen hierzwischen angeordneten polarisierenden Strahlteilerwürfel. Der polarisierte Einfalllichtstrahl wird an dem Strahlteilerwürfel um 90° abgelenkt auf die Individualisierungseinheit geführt. Dort findet die farbgetrennte individualisierende Modulation statt. Der in der Polarisation geänderte modulierte Belichtungslichtstrahl fällt wieder auf den polarisierenden Strahlteilerwürfel kann diesen jedoch aufgrund der Änderung er Polarisation passieren und trifft auf das Aufzeichnungsmaterial und das dahinter angeordnete Masterhologramm.

Da die sich im Interferenzmuster des holografischen Aufzeichnungsmaterials ausbildenden Interferenzstrukturen in der Größenordnung von einem Mikrometer liegen, muss sich das holografische Aufzeichnungsmaterial während der Aufzeichnung jeweils in einer definierten Stellung befinden. Da das holografische Aufzeichnungsmaterial in der Regel als Film ausgebildet ist, benötigt das holografische Aufzeichnungsmaterial nach dem Anordnen relativ zu dem holografischen Master bei dem im Stand der Technik bekannten Verfahren und Vorrichtungen eine Beruhigungszeit, die in der Größenordnung von einigen Sekunden liegt. Daher ist es vorteilhaft, wenn das holografische Aufzeichnungsmaterial anliegend an eine Trommel angeordnet wird und die Trommel beim Abtasten des holografischen Masters um eine Trommelachse der Trommel gedreht wird. Dadurch, dass das holografische Aufzeichnungsmaterial an der Trommel anliegt, findet eine Beruhigung des Aufzeichnungsmaterials sehr viel schneller statt. Ferner kann das holografische Aufzeichnungsmaterial, wenn es als lang gestreckter Film ausgebildet ist, anliegend an die Trommel in einem Bereich der Trommel angeordnet werden, d.h. in einem Sektor der Trommel angeordnet werden, der von dem Bereich winkelmäßig entfernt ist, an dem eine Aufzeichnung des Hologramms über eine Belichtung erfolgt.

Eine besonders einfache Strahlführung erreicht man mit einem Verfahren und einer Vorrichtung, bei der der holografische Master in die zylindrische Trommel oder das zylindrische Trommelsegment eingearbeitet wird oder ist. Beim Zuführen des holografischen Aufzeichnungsmaterials wird dieses somit vor dem holografischen Master angeordnet. Beim Belichten des holografischen Aufzeichnungsmaterials wird dieses zunächst von dem individuell modulierten Lichtstrahl durchstrahlt, der dann auf den holografischen Master trifft und zumindest zum Teil gebeugt und/oder reflektiert wird und in dem holografischen Aufzeichnungsmaterial ein das individualisierende Hologramm repräsentierendes Interferenzmuster ausbildet. Das Einarbeiten des holografischen Masters in die Trommel bzw. das Trommelsegment bietet den Vorteil, dass das Abscannen des holografischen Masters und des holografischen Aufzeichnungsmaterials gemeinsam synchronisiert durch die Trommelbewegung, d.h. die Drehung der Trommel um die Trommeldrehachse, ausgeführt werden kann. Hierdurch wird eine vereinfachte optische Strahlführung möglich gemacht.

Ebenso ist es möglich ein Step-and-Repeat-Belichtungsverfahren zu verwenden, bei dem das Aufzeichnungsmaterial während des Belichtungsvorganges ortsfest in einer Belichtungsstellung verharrt und der Belichtungslichtstrahl über das Aufzeichnungsmaterial geführt wird. Ist das individualisierte Hologramm belichtet, wird ein neues Aufzeichnungsmaterial oder ein neuer Teil des Aufzeichnungsmaterials in die Belichtungsstellung bewegt.

Um eine Trennung der Pixel der einzelnen Spatial Light Modulatoren zu garantieren, sind optische Sensoren, vorzugsweise außerhalb eines Abbildungsbereichs des Hologramms, bevorzugt in einer Tangentialebene einer Auftrefflinie des Belichtungslichtstrahls auf das holografische Aufzeichnungsmaterial angeordnet, die mit einer Steuerung gekoppelt sind, um Überlappungen der unterschiedlich farbigen Pixel der Spatial Light Modulatoren zu erfassen und Justierstellglieder an den Spatial Light Modulatoren und/oder den optischen Elementen der Zuführ- und Zusammenführoptik anzusteuern, um eine erneute Trennung der Pixel unterschiedlicher Farbe herzustellen.

Nachfolgend wird die Erfindung anhand bevorzugter Ausführungsbeispiele näher erläutert. Hierbei zeigen:
- Fig. 1: eine schematische Darstellung einer Individualisierungseinheit und einer mehrere Einzellichtquellen umfassenden Lichtquelle;
- Fig. 2: eine andere Ausführungsform einer Individualisierungseinheit, die mit einer Lichtquelle, bestehend aus mehreren Einzellichtquellen, betreibbar ist;
- Fig. 3: eine schematische Darstellung einer Individualisierungseinheit auf Basis eines X-Prismawürfels;
- Fig. 4: eine schematische Ausführungsform einer Vorrichtung zum Herstellen vollfarbiger individualisierter Hologramme;
- Fig. 5: eine weitere Ausführungsform einer Vorrichtung zum Herstellen vollfarbiger individualisierter Hologramme;
- Fig. 6: eine weitere Ausführungsform einer Vorrichtung zum Herstellen vollfarbiger individualisierter Hologramme;
- Fig. 7: eine Ausführungsform einer Vorrichtung zum Herstellen vollfarbiger individualisierter Hologramme, die einen Umlenkspiegel zum Erzeugen eines abscannenden Einfalllichtstrahls verwendet; und
- Fig. 8: eine Ausführungsform einer Vorrichtung zum Herstellen vollfarbiger individualisierter Hologramme, die ein Scanspiegelpaar verwendet.

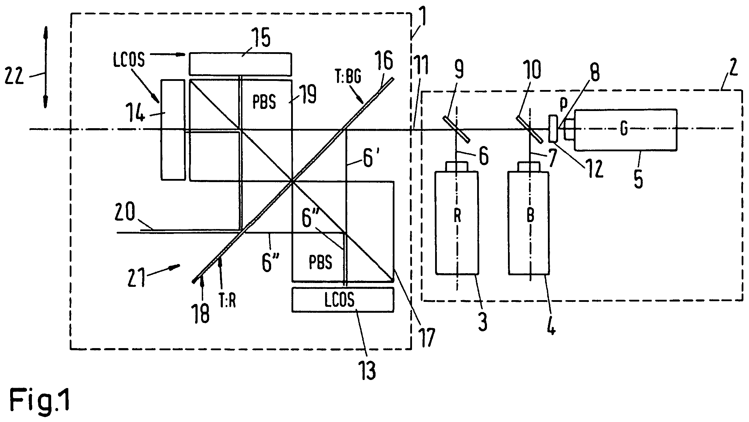

In Fig. 1 sind schematisch eine Individualisierungseinheit 1 und eine Lichtquelle 2 dargestellt. Die Lichtquelle 2 umfasst mehrere Einzelllichtquellen 3-5, die jeweils einfarbiges Licht unterschiedlicher Wellenlängen erzeugen. In dem dargestellten Beispiel erzeugen die Einzellichtquellen 3 rotes, 4 blaues und 5 grünes Licht. Die Einzellichtquellen 3-5 sind vorzugsweise so ausgebildet, dass sie das einfarbige Licht vorzugsweise als streifenförmigen oder zeilenförmigen Lichtstrahl emittieren, wobei sich die Streifen- oder Zeilenform senkrecht zur Zeichnungsebene erstreckt. Die einfarbigen zeilenförmigen Lichtstrahlen 6, 7, 8 werden über dichroitische Spiegel oder Filter 9, 10 kollinearisiert zusammengeführt, um einen mehrfarbigen Einfalllichtstrahl 11 zu bilden. Der mehrfarbige Einfalllichtstrahl 11 wird auch als weißer Lichtstrahl bezeichnet, da ein solcher Lichtstrahl aufgrund der Farbaddition vom menschlichen Auge als weiß wahrgenommen wird. Die einzelnen Einzellichtquellen 3, 4, 5 sind vorzugsweise als Laser ausgebildet, da diese die notwendige Kohärenz für eine holografische Abbildung bereitstellen. Ferner ist das Licht der Einzellichtquellen 3, 4, 5 in derselben Ebene polarisiert, beispielsweise parallel zur Zeichnungsebene. Um den einfarbigen grünen Lichtstrahl 8 senkrecht zur Zeichnungsebene zu polarisieren, ist in dessen Strahlengang ein Halbwellenlängenplättchen (*λ*/2-Plättchen) 12 eingefügt. Um eine Kollinearität der Einzellichtstrahlen 6, 7, 8 in dem Einfalllichtstrahl 11 zu gewährleisten, kann über eine Auskopplung, beispielsweise an einem 4%-Reflex-Glasplättchen, ein Regelkreis ausgeführt werden, der mit Antriebselementen an den dichroitischen Spiegeln 9 und 10, die als Piezoantriebe ausgebildet sein können, eine Strahlqualität des Einfalllichtstrahls regelt. Die Lichtquelle 2 stellt somit eine mehrfarbige Streifenlichtquelle dar.

Die Individualisierungseinheit 1 umfasst jeweils als LCoS ausgebildete Spatial Light Modulatoren 13,14,15, die den Farben Rot, Blau, Grün in dieser Reihenfolge zugeordnet sind. Jeder dieser drei Spatial Light Modulatoren 13, 14, 15 wird verwendet, um einen zugehörigen einfarbigen Lichtstrahl 6, 7, 8 individuell zu modulieren. Die Spatial Light Modulatoren 13, 14, 15 sind auf einer gemeinsamen Trägereinheit (nicht dargestellt) der Individualisierungseinheit 1 angeordnet. Vorzugsweise sind die einzelnen Spatial Light Modulatoren mit piezoelektrisch angetriebenen Justierstellgliedern (nicht dargestellt) verbunden, über die eine relative Justage der Spatial Light Modulatoren 13, 14, 15 zueinander möglich ist. Der Einfalllichtstrahl 11 wird zu einem ersten dichroitischen Strahlteiler 16 geführt, der unter einem 45°-Winkel zu dem Einfallstrahl 11 angeordnet ist. Der erste dichroitische Strahlteiler 16 ist transparent für blaues und grünes Licht und reflektiert rotes Licht. Somit wird aus dem Einfalllichtstrahl 11 ein einfarbiger roter Lichtstrahl 6' abgetrennt. Dieser fällt über einen polarisierenden Strahlteilerwürfel 17 auf den der roten Farbe zugeordneten Spatial Light Modulator 13. Aufgrund der Polarisationsrichtung parallel zur Zeichnungsebene wird der einfarbige rote Lichtstrahl 6' an dem polarisierenden Strahlteilerwürfel 17 nicht abgelenkt. In dem Spatial Light Modulator 13 wird der einfarbige rote Lichtstrahl individuell moduliert. Der zurückreflektierte individuell modulierte rote Lichtstrahl 6" ist in seiner Polarisation so verändert, dass dieser in dem polarisierenden Strahlteilerwürfel um 90° abgelenkt wird. Der individuell modulierte rote Lichtstrahl 6" tritt schließlich durch einen zweiten dichroitischen Strahlteiler 18 hindurch, der für rotes Licht transparent ist. Der grüne und blaue einfarbige Lichtstrahl 7', 8', die den ersten dichroitischen Strahlteiler passiert haben, werden an einem weiteren polarisierenden Strahlteilerwürfel 19 voneinander getrennt. Während der einfarbige blaue Lichtstrahl 7' den weiteren polarisierenden Strahlteilerwürfel 19 unabgelenkt durchläuft, an dem der Farbe Blau zugeordneten Spatial Light Modulator 14 individuell moduliert wird und zurück in den Strahlteilerwürfel als individuell modulierter blauer Lichtstrahl 7" geführt wird, wird der grüne einfarbige Lichtstrahl 8' an dem weiteren polarisierenden Strahlteilerwürfel 19 um 90° abgelenkt und von dem der Farbe Grün zugeordneten Spatial Light Modulator 15 individuell moduliert und in den weiteren polarisierenden Strahlteilerwürfel 19 als individuell modulierter grüner Lichtstrahl 8" zurück reflektiert. Da sowohl die Polarisierung des blauen individuell modulierten Lichtstrahls 7" als auch die Polarisation des grünen individuell modulierten Lichtstrahls 8" verändert ist, wird nun der blaue individuell modulierte Lichtstrahl 7" an dem weiteren polarisierenden Strahlteilerwürfel 19 um 90° reflektiert und der grüne individuell modulierte Lichtstrahl 8" unabgelenkt durch den weiteren polarisierenden Strahlteilerwürfel transmittiert. Beide einfarbigen Strahlen 7", 8" treffen auf den zweiten dichroitischen Strahlteiler und werden von diesem um 90° abgelenkt. Der zweite dichroitische Strahlteiler 18 reflektiert grünes und blaues Licht. Da alle Ablenkungen jeweils um 90° bzw. die Reflexionen eine Änderung um 180° der Strahlrichtungen bewirkt haben, verlassen alle drei individuell modulierten einfarbigen Strahlen 6", 7", 8" den zweiten dichroitischen Strahlteiler 18 an derselben Position und sind somit als ein individuell modulierter Belichtungslichtstrahl 20 zusammengeführt. Hierbei ist vorausgesetzt, dass der geeignete Abstand der optischen Elemente einer Zuführ- und Zusammenführoptik 21, der erste dichroitischen Strahlteiler 16 und der zweiten dichroitischen Strahlteiler 18 sowie die polarisierenden Strahlteilerwürfel 17,19, sowie die Spatial Light Modulatoren 13, 14, 15 in geeigneten Abständen zueinander angeordnet sind. Der Belichtungslichtstrahl 20 kann nun verwendet werden, um eine vollfarbige holografische Abbildung auszuführen. Die einzelnen Spatial Light Modulatoren sind so zueinander ausgerichtet und angesteuert, dass bei einer Abbildung des Belichtungslichtstrahls 20 sich unterschiedlich farbige Pixel nicht überlappen. Vorzugsweise sind die Spatial Light Modulatoren 13, 14, 15 als identische LCoS ausgebildet. Die Spatial Light Modulatoren sind in einem solchen Fall so ausgerichtet, dass die einzelnen Pixel einander voll überlappen würden. Aufgrund der Ansteuerung der einzelnen Spatial Light Modulatoren wird jedoch sichergestellt, dass jeweils maximal einer der Spatial Light Modulatoren Licht in einem Pixel des sich in der Überlagerung ergebenden Gesamtpixelmusters moduliert. Das durch den Belichtungslichtstrahl 20 transportierte Gesamtpixelmuster enthält somit nur einfarbige Pixel oder Pixel, die keiner der Farben zugeordnet sind.

Um zu erreichen, dass die einzelnen einfarbigen Lichtstrahlen 6', 7', 8' die entsprechenden Spatial Light Modulatoren 13, 14, 15 abscannend überstreichen, kann die gesamte Individualisierungseinheit 1 unter einem 45°-Winkel zu den einfallenden einfarbigen Lichtstrahlen 6, 7, 8, d.h. parallel zu einer linearen Translationsbewegungsrichtung 22 bewegt werden, das heißt, in der Zuführungsebene nach oben und unten.

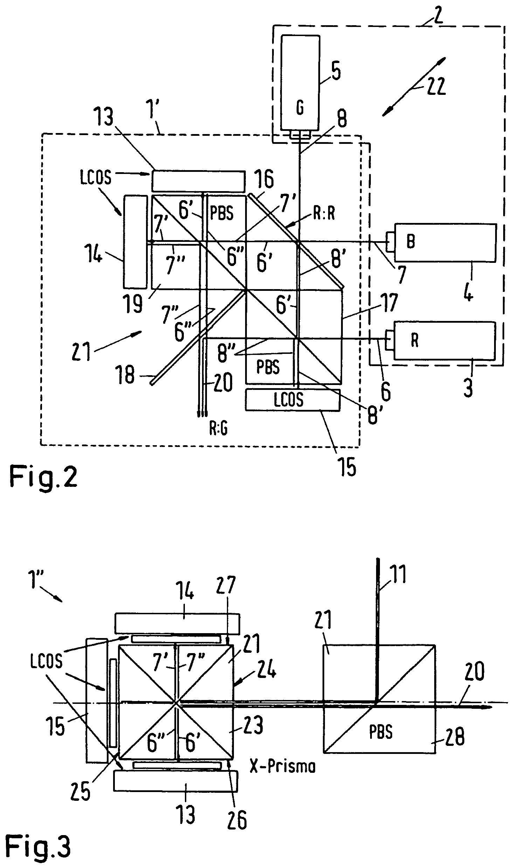

In Fig. 2 ist eine weitere Ausführungsform einer Individualisierungseinheit 1' und einer Lichtquelle 2 schematisch dargestellt. Die Lichtquelle 2 umfasst in dieser Ausführungsform drei Einzellichtquellen 3, 4, 5, die jeweils einen streifenförmigen einfarbigen Lichtstrahl 6,7,8 emittieren. (Gleiche technische Merkmale sind in allen Zeichnungen mit denselben Bezugszeichen versehen). Der einfarbige rote Lichtstrahl 6', der senkrecht zur Zeichnungsebene polarisiert ist, wird von einem polarisierenden Strahlteilerwürfel 17 um 90° abgelenkt und an einem ersten dichroitischen Strahlteiler 16, der rotes Licht reflektiert, erneut um 90° abgelenkt, tritt in einen weiteren polarisierenden Strahlteilerwürfel 19 und wird erneut um 90° auf den der Farbe Rot zugeordneten Spatial Light Modulator 13 geführt, der ebenfalls wieder als LCoS ausgeführt ist. Der blaue einfarbige Lichtstrahl 7' und der grüne einfarbige Lichtstrahl 8', die jeweils parallel zur Zeichnungsebene polarisiert sind, treten jeweils durch den ersten dichroitischen Strahlteiler 16 und den weiteren polarisierenden Strahlteiler 19 bzw. den polarisierenden Strahlteiler 17 hindurch auf die entsprechenden Spatial Light Modulatoren 14 bzw. 15, die die entsprechenden einfarbigen Lichtstrahlen 7' und 8' individuell modulieren und zurück reflektieren. Die zurückreflektierten und in ihrer Polarisationsrichtung geänderten individuell modulierten einfarbigen Lichtstrahlen 7" und 8" werden an dem weiteren polarisierenden Strahlteilerwürfel 19 bzw. dem polarisierenden Strahlteilerwürfel 17 jeweils um 90° abgelenkt. Während der individuell modulierte einfarbige grüne Lichtstrahl 8" an dem zweiten dichroitischen Strahlteiler 18 reflektiert wird, treten der individuell modulierte einfarbige Lichtstrahl 6" und der blaue individuell modulierte einfarbige Lichtstrahl 7" durch den zweiten dichroitischen Strahlteiler 18 an der Stelle hindurch, an der der grüne individuell modulierte einfarbige Lichtstrahl 8" reflektiert wird. Auch bei dieser Individualisierungseinheit 1' wird somit ein zusammengeführter Belichtungslichtstrahl 20 geschaffen.

Wie bei der Ausführungsform nach Fig. 1 sind die einzelnen Spatial Light Modulatoren 13, 14, 15 sowie die weiteren optischen Elemente der Zuführ- und Zusammenführoptik 21, welche die beiden dichroitischen Strahlteiler 16, 18 und die beiden polarisierenden Strahlteilerwürfel 17, 19 umfasst, so ausgebildet, dass sie relativ zueinander justierbar sind. Die Spatial Light Modulatoren können über piezogetriebene Justierstellglieder während des Betriebs zueinander nachjustiert und ausgerichtet werden. Um zu erreichen, dass die einzelnen einfarbigen Lichtstrahlen 6', 7', 8' die entsprechenden Spatial Light Modulatoren 13, 14, 15 abscannend überstreichen, kann die gesamte Individualisierungseinheit 1' unter einem 45°-Winkel zu den einfallenden einfarbigen Lichtstrahlen 6, 7, 8, d.h. parallel zu einer linearen Translationsbewegungsrichtung 22 bewegt werden.
Um zu erreichen, dass die einzelnen einfarbigen Lichtstrahlen 6', 7', 8' die entsprechenden Spatial Light Modulatoren 13, 14, 15 abscannend überstreichen, kann die gesamte Individualisierungseinheit 1' unter einem 45°-Winkel zu den einfallenden einfarbigen Lichtstrahlen 6, 7, 8, d.h. parallel zu einer linearen Translationsbewegungsrichtung 22 bewegt werden.

In Fig. 3 ist eine weitere Ausführung einer Individualisierungseinheit 1" dargestellt. Diese umfasst einen so genannten X-Prismawürfel 23, welcher zwei gekreuzte dichroitische Filter umfasst. Ein mehrfarbiger Einfalllichtstrahl 11 tritt an einer Vorderseite 24 des X-Prismawürfels 23 in den X-Prismawürfel 23 ein. An den gekreuzten integrierten dichroitischen Strahlteilern werden einfarbige Lichtstrahlen 6', 7', 8' aus dem einfallenden Einfalllichtstrahl 11 abgeteilt. Bei einer Ausführungsform reflektieren die beiden integrierten gekreuzten dichroitischen Strahlteiler die Farben Rot und Blau, während der grüne einfarbige Lichtstrahl 8' an einer Rückseite 25 des X-Prismawürfels 23 auf den hierzu gehörigen Spatial Light Modulator 15 trifft und individuell moduliert wird. Der rote einfarbige Lichtstrahl 6' und der blaue einfarbige Lichtstrahl 7' treten entsprechend an einer linken Seite 26 bzw. einer rechten Seite 27 aus dem X-Prismawürfel 23 heraus. Dort werden sie von den den entsprechenden Farben zugeordneten Spatial Light Modulatoren 13, 14 individuell moduliert und als individuelle modulierte Lichtstrahlen 6" und 8" zurückreflektiert. Die zurückreflektierten individuell modulierten Lichtstrahlen 6" und 8" werden an den gekreuzten dichroitischen Strahlteilern erneut um 90° abgelenkt und so mit dem individuell modulierten reflektierten grünen einfarbigen Lichtstrahl 8" zusammengeführt zu einem mehrfarbigen modulierten Belichtungslichtstrahl 20. Eine Einkopplung des Einfalllichtstrahls 11 und eine Auskopplung des individuell modulierten Belichtungslichtstrahls 20 erfolgt über einen zusätzlichen polarisierenden Strahlteilerwürfel 28.

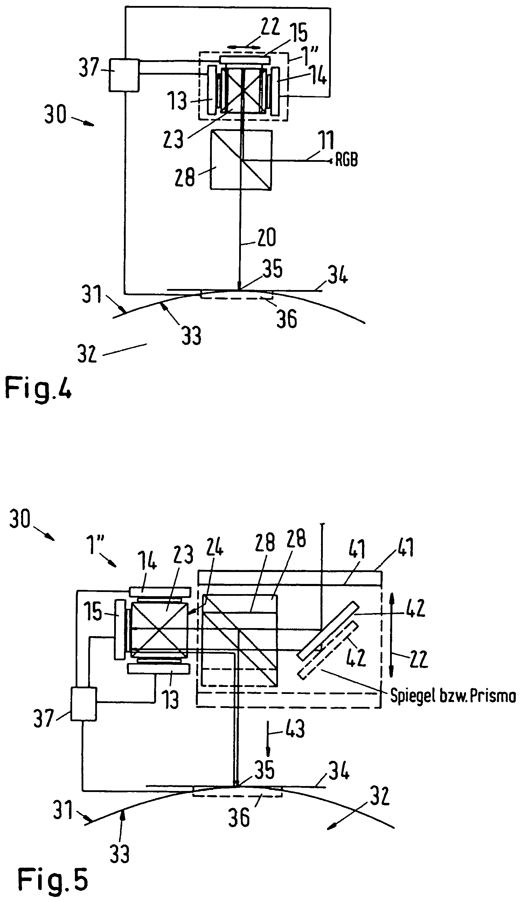

In Fig. 4 ist schematisch eine Vorrichtung 30 zum Herstellen eines vollfarbigen individualisierten Hologramms dargestellt. Das holografische Aufzeichnungsmaterial 31 wird auf einer Trommel 32 anliegend an diese zugeführt. In die Trommel 32 ist ein holografischer Master 33 eingearbeitet, der beispielsweise Licht roter, blauer und grüner Farbe beugt. Ein mehrfarbiger Einfalllichtstrahl 11, der vorzugsweise dreifarbig in den Farben Rot, Grün, Blau erzeugt ist, fällt auf den zusätzlichen polarisierenden Strahlteilerwürfel 28 und wird von einer Individualisierungseinheit 1", wie sie ausführlich im Zusammenhang mit Fig. 3 erläutert wurde, farbgetrennt individuell moduliert und zurück reflektiert. Der individuell modulierte Belichtungslichtstrahl 20 tritt aus dem zusätzlichen polarisierenden Strahlteilerwürfel 28 aus, durchstrahlt das holografische Aufzeichnungsmaterial 31 und wird zumindest teilweise an dem in der Trommel 32 befindlichen holografischen Master 33 gebeugt und/oder reflektiert. Der gebeugte und/oder reflektierte Anteil überlagert sich in dem holografischen Aufzeichnungsmaterial mit dem individuell farbgetrennt modulierten Belichtungsstrahl 20 und bildet so ein Interferenzmuster aus, welches das farbige individualisierte Hologramm repräsentiert.

Bei der dargestellten Ausführungsform wird ein streifendes Abtasten, d.h. ein Abscannen der Spatial Light Modulatoren 13-15, durch eine Translationsbewegung der Individualisierungseinheit 1" entlang der Translationsrichtung 22 bewirkt. Diese ist parallel zu einer Tangentialebene 34 an das Aufzeichnungsmaterial 31 an einer Auftrefflinie 35 des Belichtungslichtstrahls 20, der wie der Einfalllichtstrahl 11 senkrecht zur Zeichnungsebene streifenförmig ausgebildet ist. Die Belichtung des holografischen Aufzeichnungsmaterials 31 wird so ausgeführt, dass sich das holografische Aufzeichnungsmaterial 31 und der holografische Master 33 durch eine Bewegung der Trommel 32 angepasst zu der Translationsbewegung der Individualisierungseinheit 1" bewegen. Die Drehgeschwindigkeit der Trommel 32 ist so gewählt, dass die Durchstrahlungsdauer des holografischen Aufzeichnungsmaterials 31 einer Belichtungszeit entspricht, die eine ausreichende Energiemenge in dem holografischen Aufzeichnungsmaterial während des Passierens des Belichtungslichtstrahls 20 aufnimmt, um das durch das Interferenzmuster repräsentierte Hologramm zu speichern. Die Durchleuchtung und Speicherung erfolgt so, dass es in einem individualisierenden Gesamtmuster, das von der Individualisierungseinheit 1" abgebildet wird, keine Pixel gibt, in denen unterschiedlich farbiges Licht abgebildet ist. Dies bedeutet, dass sich keine Pixel unterschiedlicher Farbe der einzelnen Spatial Light Modulatoren 13-15 überlappen. Um eine Nachausrichtung bzw. Justage der einzelnen Spatial Light Modulatoren 13-15 ausführen zu können, sind benachbart zu einem Abbildungsbereich, d.h. bevorzugt seitlich neben der Trommel 32, in der Darstellung oberhalb oder unterhalb der Zeichnungsebene, bevorzugt in der Tangentialebene 34 optische Sensoren 36 angeordnet, die eine Überlappung unterschiedlich farbiger Pixel detektieren können und eine Justage zur Trennung der unterschiedlich farbigen Pixel über eine Regel- und Steuereinheit 37 und an den Spatial Light Modulatoren 13-15 angeordnete, vorzugsweise piezoelektrisch ausgestaltete, Justierstellglieder bewirken können.

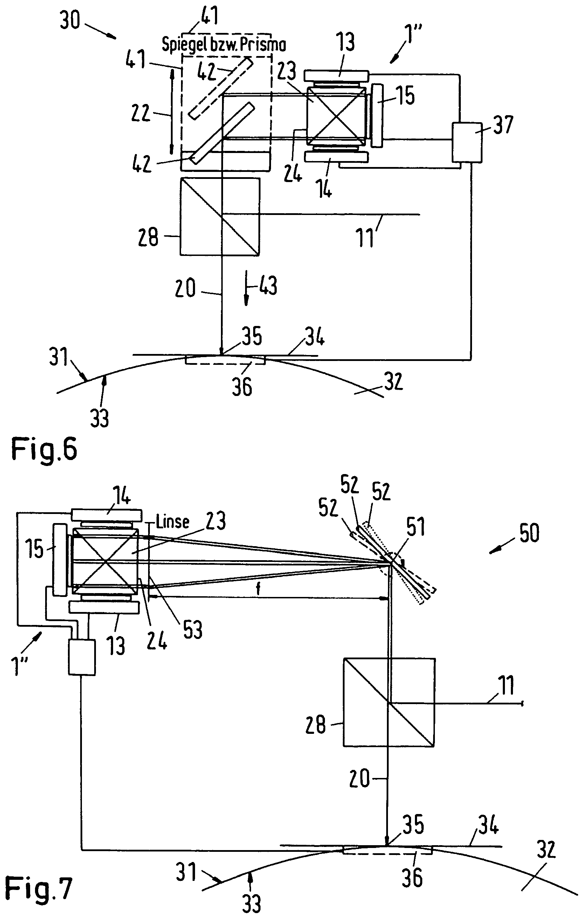

In Fig. 5 und 6 sind andere Ausführungsformen einer Vorrichtung 30 zum Herstellen vollfarbiger individualisierter Hologramme dargestellt. Bei diesen Ausführungsformen wird ein scannendes Überstreichen der Spatial Light Modulatoren 13-15 durch ein Bewegen eines optischen Systems 41 erreicht, welches einen Ablenkspiegel 43 umfasst. Bei der Ausführungsform nach Fig. 5 umfasst das optische System 41 zusätzlich den zusätzlichen polarisierenden Strahlteilerwürfel 28. Bei der Ausführungsform nach Fig. 6 umfasst das optische System 41 nur den Ablenkspiegel 42.

In beiden Ausführungsformen ist die Individualisierungseinheit 1" um 90° gegenüber der Ausführungsform nach Fig. 4 gedreht. Dies bedeutet, dass eine Vorderseite 24 des X-Prismawürfels 23 parallel zu einer Belichtungsrichtung 43 orientiert ist. Der Einfalllichtstrahl 11 fällt bei der Ausführungsform nach Fig. 5 ebenfalls parallel zur Belichtungsrichtung 43 auf den Ablenkspiegel 42, der unter einem 45°-Winkel hierzu angeordnet ist und den Einfalllichtstrahl 11 um 90° auf die Individualisierungseinheit 1" ablenkt. Von dieser wird der individuell farbgetrennt modulierte Belichtungslichtstrahl 20 zurückgeworfen und an dem zusätzlichen Strahlteiler 28 ausgekoppelt und um 90° in Richtung auf das holografische Aufzeichnungsmaterial 31 abgelenkt. Ein Abscannen der Spatial Light Modulatoren 13-15 wird erreicht, indem das optische System 41 parallel zur Belichtungsrichtung 43, d.h. parallel zur Vorderseite 24 des X-Prismawürfels 23 der Individualisierungseinheit 1" translatorisch linear bewegt wird.

In Fig. 5 ist dieses optische System 41 in einer zweiten Stellung gestrichelt dargestellt. Gut zu erkennen ist, dass sich die Auftreffposition bzw. Auftrefflinie 35 relativ zu einer Trommeldrehachse (nicht dargestellt) während des Abscannens nicht verändert hat.

In Fig. 6 fällt der Einfalllichtstrahl 11 zunächst auf den zusätzlichen polarisierenden Strahlteilerwürfel 28, wird um 90° umgelenkt und trifft dann auf den Ablenkspiegel 42 des optischen Systems 41. Von dem Ablenkspiegel 42 wird der Einfalllichtstrahl 11 erneut um 90° abgelenkt. Der von der Individualisierungseinheit 1" individuell modulierte Belichtungslichtstrahl 20 wird über den Ablenkspiegel 42 und den zusätzlichen polarisierenden Strahlteilerwürfel 28 auf das holografische Aufzeichnungsmaterial 31 gelenkt. Erneut ist das optische System 41 gestrichelt in einer zweiten Stellung dargestellt, in die es mittels einer Translationsbewegung entlang der Translationsrichtung 22, die in diesem Fall parallel zur Belichtungsrichtung 43 orientiert ist, linear verschoben worden ist, um ein Abscannen der Spatial Light Modulatoren 13-15 zu bewirken.

In Fig. 7 ist eine weitere Ausführungsform einer Vorrichtung 50 zum Herstellen eines individualisierten farbigen Hologramms dargestellt. Bei dieser Ausführungsform wird der Einfalllichtstrahl 11 über den zusätzlichen polarisierenden Strahlteilerwürfel 28 zunächst um 90° umgelenkt, um dann auf einen um eine Spiegeldrehachse drehbar gelagerten Umlenkspiegel 52 zu treffen. Hierbei befindet sich die Spiegeldrehachse 51 in der Spiegelebene des Umlenkspiegels 52. Die Auftrefflinie des Einfalllichtstrahls 11 trifft mit der Spiegeldrehachse 51 des Umlenkspiegels 52 zusammen. Diese befindet sich ferner in einem Fokus einer Abbildungsoptik 53, die vor der Individualisierungseinheit 1" angeordnet ist. Über ein drehendes Verkippen kann ein Abscannen der Spatial Light Modulatoren 13-15 erreicht werden. Dieses Abscannen ist selbstverständlich synchronisiert mit der Drehbewegung der Trommel, wie dies im Zusammenhang mit Fig. 4 erläutert wurde. Bei dieser Ausführungsform treten jedoch unterschiedliche Weglängen auf, entlang derer der Belichtungslichtstrahl von den einzelnen Abschnitten der Spatial Light Modulatoren 13-15 zu dem holografischen Aufzeichnungsmaterial 31 geführt wird.

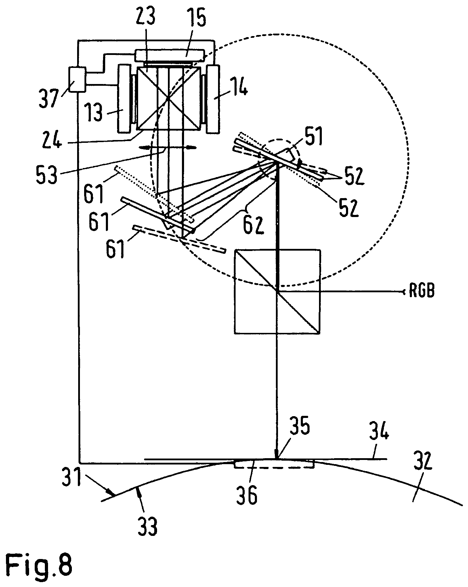

In Fig. 8 ist eine Ausführungsform gezeigt, bei der diese Weglängenunterschiede durch einen weiteren Umlenkspiegel 61 kompensiert sind, der deshalb auch als Kompensationsspiegel bezeichnet ist. Dieser weitere Umlenkspiegel 61 ist unter einem festen Abstand 62 und einem festen Relativwinkel δα gemeinsam mit dem Umlenkspiegel 52 um dessen Speicherdrehachse 51 drehbar. Der Einfalllichtstrahl 11 wird bei dieser Ausführungsform über den zusätzlichen polarisierenden Strahlteilerwürfel 28, den Umlenkspiegel 52 und den weiteren Umlenkspiegel 61 und eine Abbildungsoptik 53 auf die Individualisierungseinheit 1" gelenkt. Der Belichtungslichtstrahl 20 wird von der Individualisierungseinheit 1" über die Abbildungsoptik 53 den weiteren Umlenkspiegel 61 und den Umlenkspiegel 52 sowie die zusätzlichen polarisierenden Strahlteilerwürfel 28 auf das holografische Aufzeichnungsmaterial 31 gelenkt. Auch bei dieser Ausführungsform befindet sich die Spiegeldrehachse 51 des Umlenkspiegels 52 im Fokus der Abbildungsoptik 53.

Die beschriebenen Ausführungsformen für das Individualisierungssystem 1, 1', 1", die Lichtquelle 2 und die Vorrichtung 30, 50 zum Herstellen vollfarbiger individualisierter Hologramme sind lediglich beispielhafter Natur. Es ergibt sich für den Fachmann, dass andere Ausgestaltungen möglich sind. Insbesondere im Zusammenhang mit den Ausführungsformen nach Fig. 4 bis 6 wurde auf eine Beschreibung der Abbildungsoptik verzichtet, um die Beschreibung der Erfindung nicht unnötig zu verkomplizieren.

### Bezugszeichenliste

- 1, 1', 1": Individualisierungseinheit
- 2: Lichtquelle
- 3: Einzellichtquelle (rot)
- 4: Einzellichtquelle (blau)
- 5: Einzellichtquelle (grün)
- 6, 6': einfarbiger Lichtstrahl (rot)
- 7, 7': einfarbiger Lichtstrahl (blau)
- 8, 8': einfarbiger Lichtstrahl (grün)
- 6": einfarbiger individuell modulierter Lichtstrahl (rot)
- 7": einfarbiger individuell modulierter Lichtstrahl (blau)
- 8": einfarbiger individuell modulierter Lichtstrahl (grün)
- 9, 10: dichroitische Spiegel
- 11: Einfalllichtstrahl
- 12: Halbwellen(längen)plättchen
- 13: Spatial Light Modulator (rot)
- 14: Spatial Light Modulator (blau)
- 15: Spatial Light Modulator (grün)
- 16: erster dichroitischer Strahlteiler
- 17: polarisierender Strahlteilerwürfel
- 18: zweiter dichroitischer Strahlteiler
- 19: weiterer polarisierender Strahlteilerwürfel
- 20: Belichtungslichtstrahl
- 21: Zuführ- und Zusammenführoptik
- 22: Translationsbewegungsrichtung
- 23: X-Prismawürfel
- 24: Vorderseite
- 25: Rückseite
- 26: linke Seite
- 27: rechte Seite
- 28: zusätzlicher polarisierender Strahlteiler
- 30: Vorrichtung zum Herstellen eines individualisierten Hologramms
- 31: holografisches Aufzeichnungsmaterial
- 32: Trommel
- 33: holografischer Master
- 34: Tangentialebene
- 35: Auftrefflinie
- 36: optische Sensoren
- 37: Steuereinheit
- 41: optisches System
- 42: Ablenkspiegel
- 43: Belichtungsrichtung
- 50: Vorrichtung zum Herstellen eines individualisierten Hologramms
- 51: Spiegeldrehachse
- 52: Umlenkspiegel
- 53: Abbildungsoptik
- 61: weiterer Umlenkspiegel
- 62: fester Abstand

## Patentansprüche

1. Verfahren zum Herstellen eines farbigen individualisierten Hologramms, bei dem Licht mehrerer unterschiedlicher Wellenlängen erzeugt wird,
das Licht farbgetrennt individuell räumlich moduliert wird,
das modulierte Licht optisch so geführt wird, dass das Licht an einem holografischen Master (33) zumindest teilweise gebeugt und/oder reflektiert wird und in dem einem holografischen Aufzeichnungsmaterial (31) so mit dem modulierten nicht gebeugten und/oder reflektierten Licht überlagert wird, dass sich ein das mehrfarbige individualisierte Hologramm repräsentierendes Interferenzmuster ausbildet und das mehrfarbige individualisierte Hologramm aufgenommen wird,
**dadurch gekennzeichnet, dass**
das Licht mittels mehrerer Spatial Light Modulatoren (13-15) nach Wellenlängen getrennt zeitgleich moduliert wird, wobei jeder der mehreren Wellenlängen des Lichts ein eigener Spatial Light Modulator zugeordnet ist, der einen einfarbigen Lichtstrahl (6'-8') der entsprechenden Wellenlänge individuell moduliert, und die mehreren einfarbigen modulierten Lichtstrahlen (6"-8") der mehreren Wellenlängen vor dem Beugen und/oder Reflektieren an dem holografischen Master (33) und dem Überlagern in dem holografischen Aufzeichnungsmaterial (31) zu einem mehrfarbigen nach Wellenlängen getrennt individuell modulierten Belichtungslichtstrahl (20) kollinear zusammengeführt werden, wobei die Spatial Light Modulatoren (13-15) so zueinander angeordnet sind und die Strahlzusammenführung so ausgeführt wird, dass jedem der Pixel des individualisierten Hologramms genau eine der mehreren Wellenlängen zugeordnet ist.

2. Verfahren nach Anspruch 1, **dadurch gekennzeichnet, dass** das Licht als ein mehrfarbiger streifen- oder zeilenförmiger Lichtstrahl erzeugt wird.

3. Verfahren nach Anspruch 1 oder 2, **dadurch gekennzeichnet, dass** das Licht mehrerer Wellenlängen als ein kollinear zusammengeführter Einfalllichtstrahl (11) mehrerer einfarbiger polarisierter Lichtstrahlen (6-8) erzeugt wird.

4. Verfahren nach einem der Ansprüche 1 bis 3, **dadurch gekennzeichnet, dass** die mehreren einfarbigen Lichtstrahlen mittels dichroitischer optischer Elemente (9, 10, 16, 18) und polarisationsabhängiger Strahlteiler (17, 19) auf die Spatial Light Modulatoren (13-15) geführt und kollinear zu einem Belichtungslichtstrahl (20) zusammengeführt werden.

5. Verfahren nach einem der Ansprüche 1 bis 4, **dadurch gekennzeichnet, dass** eine translatorische Linearbewegung eines optischen Systems (41) bewirkt wird, um eine zeitgleiche scannende Strahlführung der einfarbigen Lichtstrahlen (6'-8') über die entsprechenden Spatial Light Modulatoren (13-15) zu erreichen.

6. Verfahren nach Anspruch 5, **dadurch gekennzeichnet, dass** das optische System (41) eine Individualisierungseinheit (1, 1', 1") umfasst, die die Spatial Light Modulatoren (13-15) und eine Zuführ- und Zusammenführoptik (21) zum Lenken der einfarbigen Lichtstrahlen (6'-8') auf die Spatial Light Modulatoren (13-15) und zum kollinearen Zusammenführen der einfarbigen modulierten Lichtstrahlen (6"-8") zu dem Belichtungslichtstrahl (20) umfasst.

7. Verfahren nach einem der Ansprüche 1 bis 4, **dadurch gekennzeichnet, dass** ein Abscannen der Spatial Light Modulatoren (13-15) durch ein Schwenken eines Umlenkspiegels (52) bewirkt wird, der um eine in der Spiegelebene liegende Spiegeldrehachse drehbar ist.

8. Verfahren nach Anspruch 7, **dadurch gekennzeichnet, dass** beabstandet zu dem Umlenkspiegel (52) ein Kompensationsspiegel so angeordnet ist, dass er gegenüber einer planparallelen Orientierung zu dem Umlenkspiegel (52) in der Drehebene des Umlenkspiegels (52) um einen festgelegten Relativwinkel verdreht ist und unter Beibehaltung des Abstands und des Relativwinkels gemeinsam mit dem Umlenkspiegel (52) um dessen Spiegeldrehachse gedreht wird, wobei der mehrfarbige Einfalllichtstrahl über den Umlenkspiegel (52), den Kompensationsspiegel und eine Abbildungsoptik auf die Individualisierungseinheit (1, 1', 1") gelenkt wird und der modulierte Belichtungslichtstrahl über die Abbildungsoptik, den Kompensationsspiegel und den Umlenkspiegel (52) geführt wird.

9. Vorrichtung (30; 50) zum Herstellen eines farbigen individualisierten Hologramms, umfassend eine Lichtquelle (2), die Licht mehrerer unterschiedlicher Wellenlängen bereitstellt,
eine Individualisierungseinheit (1, 1', 1 "), die das Licht nach Wellenlängen betrennt individuell räumlich moduliert,
wobei das modulierte Licht optisch so geführt ist, dass das Licht an einem holografischen Master (33) zumindest teilweise gebeugt und/oder reflektiert wird und in dem einem holografischen Aufzeichnungsmaterial (31) so mit dem modulierten nicht gebeugten und/oder reflektierten Licht überlagert ist, dass sich ein das mehrfarbige individualisierte Hologramm repräsentierende Interferenzmuster ausbildet und das mehrfarbige individualisierte Hologramm gespeichert wird,
**dadurch gekennzeichnet, dass**
die Individualisierungseinheit (1, 1', 1") mehrere Spatial Light Modulatoren (13-15) und eine Zuführ- und Zusammenführoptik (21) umfasst,
wobei jeder der mehreren Wellenlängen des Lichts ein eigener Spatial Light Modulator zugeordnet ist, und wobei die Zuführ- und Zusammenführoptik (21) zum Lenken einfarbiger Lichtstrahlen (6'-8') auf die den jeweiligen Wellenlängen zugeordneten Spatial Light Modulatoren (13-15), die die entsprechenden einfarbigen Lichtstrahlen (6'-8') gemäß entsprechender Wellenlängenpixelmuster zeitgleich individuell modulieren, und zum kollinearen Zusammenführen der einfarbigen modulierten Lichtstrahlen (6"-8") zu einem Belichtungslichtstrahl (20) ausgebildet ist, und die Spatial Light Modulatoren (13-15) so zueinander ausgerichtet und angesteuert sind, dass die Strahlzusammenführung so ausgeführt ist, dass jedem der Pixel des individualisierten Hologramms genau eine der mehreren Wellenlängen zugeordnet ist.

10. Vorrichtung (30; 50) nach Anspruch 9, **dadurch gekennzeichnet, dass** die Lichtquelle (2) eine mehrfarbige Streifenlichtquelle ist, die einen mehrfarbigen streifen- oder zeilenförmigen Einfalllichtstrahl (11) erzeugt.

11. Vorrichtung (30; 50) nach Anspruch 9 oder 10, **dadurch gekennzeichnet, dass** die Zuführ- und Zusammenführoptik (21) dichroitische optische Elemente (9, 10, 16, 18) und polarisationsabhängige Strahlteiler (17, 19) umfasst, vorzugsweise zwei dichroitische Strahlteiler (16, 18) und zwei polarisierende Strahlteilerwürfel (17, 19), und weiter vorzugsweise einen dichroitischen X-Prismawürfel (23).

12. Vorrichtung (30; 50) nach Anspruch 9 oder 10, **dadurch gekennzeichnet, dass** die Zuführ- und Zusammenführoptik (21) einen dichroitischen X-Prismawürfel (23) umfasst und die Spatial Light Modulatoren (13-15) an drei Seiten des dichroitischen X-Prismawürfels (23) angeordnet sind.

13. Vorrichtung (30; 50) nach einem der Ansprüche 9 bis 12, **gekennzeichnet durch** eine Translationseinheit, um ein optisches System (41) linear in einer Richtung (22) zu bewegen, um ein Abscannen aller Spatial Light Modulatoren (13-15) **durch** die entsprechenden einfarbigen Lichtstrahlen (6'-8') zeitgleich zu bewirken.

14. Vorrichtung (30; 50) nach Anspruch 13, **dadurch gekennzeichnet, dass** das optische System (41) die Individualisierungseinheit (1, 1', 1") umfasst, wobei ein Umlenkspiegel (52) relativ zu der Individualisierungseinheit (1, 1', 1") angeordnet und dem holografischen Aufzeichnungsmaterial (31) angeordnet ist, der um eine in der Spiegelebene liegende Spiegeldrehachse (51) drehbar gelagert ist, wobei das nicht modulierte Licht über den Umlenkspiegel (52) auf die Individualisierungseinheit (1, 1', 1") führbar ist und das modulierte Licht über den Umlenkspiegel (52) auf das Abbildungsmaterial geführt ist, wobei eine Drehung des Umlenkspiegels (52) ein Abscannen der Spatial Light Modulatoren (13-15) bewirkt.

15. Vorrichtung (30; 50) nach Anspruch 14, **dadurch gekennzeichnet, dass**
beabstandet zu dem Umlenkspiegel (52) ein Kompensationsspiegel (61) so angeordnet
ist, dass er gegenüber einer planparallelen Orientierung zu dem Umlenkspiegel (52) in der Drehebene des Umlenkspiegels (52) um einen festgelegten Relativwinkel verdreht ist und unter Beibehaltung des Abstands (63) und des Relativwinkels gemeinsam mit dem Umlenkspiegel (52) um dessen Spiegeldrehachse drehbar ist,
wobei der mehrfarbige Einfalllichtstrahl (11) über den Umlenkspiegel (52), den Kompensationsspiegel (61) und eine Abbildungsoptik (63) auf die Individualisierungseinheit (1, 1', 1") gelenkt wird, und der modulierte Belichtungslichtstrahl (20) über die Abbildungsoptik (63), den Kompensationsspiegel (61) und den Umlenkspiegel (52) geführt wird.

16. Vorrichtung (30; 50) nach einem der Ansprüche 9 bis 15, **dadurch gekennzeichnet, dass** Aufzeichnungsmaterial (31) anliegend an eine zylindrische Trommel (32) zuführbar ist, und die Trommel (32) mit einer Trommelantriebseinrichtung gekoppelt ist, um beim Abscannen des holografischen Masters (33) die Trommel (32) um eine Trommeldrehachse zu drehen.

## Claims

1. Method for producing a coloured individualised hologram in which light of a plurality of different wavelengths is generated, the light is spatially modulated, colour by colour, in an individual manner, the modulated light is optically guided in such a manner that the light is at least partially refracted and/or reflected on a holographic master (33) and superposed with the modulated non-refracted and/or non-reflected light within a holographic recording material (31) such that an interference pattern representing the multi-coloured individualised hologram is formed and the multi-coloured individualised hologram is recorded,
**characterised in that**,
the light is modulated wavelength by wavelength and at the same time by means of a plurality of spatial light modulators (13-15), with each of the plurality of wavelengths of the light being associated with a dedicated spatial light modulator which individually modulates a monochrome light beam (6'-8') of the corresponding wavelength, and the plurality of monochrome modulated light beams (6"-8") of the plurality of wavelengths being combined in a collinear manner, prior to refraction and/or reflection on the holographic master (33) and the superposition in the holographic recording material (31), to give a multicolour exposure light beam (20) that is individually modulated wavelength by wavelength, with the spatial light modulators (13-15) being disposed relative to one another and the beams being combined in such a manner that exactly one of the plurality of wavelengths is associated with every pixel of the individualised hologram.

2. The method of claim 1 **characterised in that** the light is generated as a multi-coloured light beam having the form of a strip or line.

3. The method of claim 1 or 2 **characterised in that** the light of a plurality of wavelengths is generated as a collinearly combined incident light beam (11) of a plurality of monochrome polarised light beams (6-8).

4. The method of any one of claims 1 to 3 **characterised in that** the plurality of monochrome light beams are guided onto the spatial light modulators (13-15) by means of dichroic optical elements (9,10, 16,18) and polarisation-dependent beam splitters (17,19) and combined in a collinear manner to give an exposure light beam (20).

5. The method of any one of claims 1 to 4 **characterised in that** a translatory linear motion of an optical system (41) is brought about so as to achieve a simultaneous scanning guidance of the monochrome light beams (6'-8') across the corresponding spatial light modulators (13-15).

6. The method of claim 5 **characterised in that** the optical system (41) comprises an individualising unit (1, 1', 1") which comprises the spatial light modulators (13-15) and a conducting and combining optics system (21) for guiding the monochrome light beams (6'-8') to the spatial light modulators (13-15) and for the collinear combining of the monochrome modulated light beams (6"-8") to give the exposure light beam (20).

7. The method of any one of claims 1 to 4 **characterised in that** a scanning of the spatial light modulators (13-15) is effected by a swivelling of a tilted mirror (52) which is able to swivel about a mirror rotation axis that lies in the plane of the mirror.

8. The method of claim 7 **characterised in that** a compensating mirror is arranged at a distance away from the tilted mirror (52) in such a manner that, relative to a plane-parallel orientation, it is rotated by a set relative angle to the tilted mirror (52) in the rotation plane of the tilted mirror (52) and is rotated together with the tilted mirror (52) about the latter's axis of rotation while maintaining the distance and the relative angle, with the multi-coloured incident light beam being directed by the tilted mirror (52), the compensating mirror and a projection optics system onto the individualising unit (1, 1', 1") and the modulated exposure light beam being guided by the projection optics systems, the compensating mirror and the tilted mirror (52).

9. Device (30; 50) for producing a coloured individualised hologram, comprising a light source (2) which supplies light of a plurality of different wavelengths, and an individualising unit (1,1',1") which modulates the light spatially, wavelength by wavelength, in an individual manner, with the modulated light being optically guided such that the light is at least partially refracted and/or reflected on a holographic master (33) and superposed with the modulated non-refracted and/or non-reflected light within a holographic recording material (31) such that an interference pattern representing the multi-coloured individualised hologram is formed and the multi-coloured individualised hologram is stored, **characterised in that** the individualising unit (1, 1', 1") comprises a plurality of spatial light modulators (13-15) and a conducting and combining optics system (21), with each of the plurality of wavelengths of the light being associated with a dedicated spatial light modulator, and with the conducting and combining optics system (21) being configured to direct monochrome light beams (6'-8') to the spatial light modulators (13-15) which are associated with the respective wavelengths and which at the same time individually modulate the corresponding monochrome light beams (6'-8') according to corresponding wavelength pixel patterns, and being also configured for the collinear combining of the monochrome modulated light beams (6"-8") to form an exposure light beam (20), and with the spatial light modulators (13-15) being aligned to one another and actuated in such a manner that the beam combination is effected **in that** exactly one of the plurality of wavelengths is associated with each of the pixels of the individualised hologram.

10. The device (30; 50) of claim 9 **characterised in that** the light source (2) is a multi-coloured strip light source which generates a multi-coloured incident light beam (11) having the form of a strip or line.

11. The device (30; 50) of claim 9 or 10 **characterised in that** the conducting and combining optics system (21) comprises dichroic optical elements (9,10,16,18) and polarisation-dependent beam splitters (17,19), preferably two dichroic beam splitters (16,18) and two polarising beam splitter cubes (17,19) and also preferably one dichroic X-prism cube (23).

12. The device (30; 50) of claim 9 or 10 **characterised in that** the conducting and combining optics system (21) comprises a dichroic X-prism cube (23) and the spatial light modulators (13-15) are arranged on three sides of the dichroic X-prism cube (23).

13. The device (30; 50) of any one of claims 9 to 12 **characterised by** a translation unit in order to move an optical system (41) linearly in a direction (22) so as to effect a scanning of all spatial light modulators (13-15) by the corresponding monochrome light beams (6'-8') at the same time.

14. The device (30; 50) of claim 13 **characterised in that** the optical system (41) comprises the individualising unit (1, 1', 1"), with a tilted mirror (52) being arranged relative to the individualising unit (1, 1', 1") and to the holographic recording material (31) which is mounted so as to be able to rotate about a mirror rotation axis (51) lying in the mirror's plane, with the non-modulated light being guidable by the tilted mirror (52) onto the individualising unit (1, 1', 1") and the modulated light being guided by the tilted mirror (52) onto the imaging material, and with a turning of the tilted mirror (52) bringing about a scanning of the spatial light modulators (13-15).

15. The device (30; 50) of claim 14 **characterised in that** a compensating mirror (61) is arranged at a distance away from the tilted mirror (52) such that, relative to a plane-parallel orientation to the tilted mirror (52), it is rotated by a set relative angle in the rotation plane of the tilted mirror (52) and can be rotated together with the tilted mirror (52) about the latter's axis of rotation while maintaining the distance (63) and the relative angle, with the multi-coloured incident light beam (11) being guided by the tilted mirror (52), the compensating mirror (61) and a projection optics system (63) onto the individualising unit (1, 1', 1") and the modulated exposure light beam (20) being guided by the projection optics system (63), the compensating mirror (61) and the tilted mirror (52).

16. The device (30; 50) of any one of claims 9 to 15 **characterised in that** recording material (31) can be fed lying on a cylindrical drum (32) and the drum (32) is coupled to a drum driving device in order for the drum (32) to be rotated about its axis of rotation while scanning the holographic master (33).

## Revendications

1. Procédé servant à fabriquer un hologramme coloré individualisé, dans le cadre duquel de la lumière de plusieurs longueurs d'ondes différentes est produite,
la lumière est modulée spatialement individuellement de manière séparée selon les couleurs,
la lumière modulée est guidée de manière optique de telle sorte que la lumière est au moins en partie diffractée et/ou réfléchie au niveau d'un maître (33) holographique et est superposée à la lumière modulée non diffractée et/ou non réfléchie dans le matériau d'enregistrement (31) holographique de telle sorte qu'un modèle d'interférence représentant l'hologramme individualisé polychrome se forme et que l'hologramme individualisé polychrome est enregistré,
**caractérisé en ce**
**que** la lumière est modulée simultanément de manière séparée selon les longueurs d'ondes au moyen de plusieurs modulateurs spatiaux de lumière (13 - 15), dans lequel un propre modulateur spatial de lumière est associé à chacune des nombreuses longueurs d'ondes de la lumière, lequel modulateur spatial de lumière module de manière individuelle un faisceau de lumière (6' - 8') monochrome de la longueur d'onde correspondante et dans lequel les nombreux faisceaux de lumière (6'' - 8") modulaires monochromes de plusieurs longueurs d'ondes sont regroupés de manière colinéaire en un faisceau de lumière d'éclairage (20) modulé individuellement monochrome de manière séparée selon les longueurs d'ondes avant la diffraction et/ou le réfléchissement au niveau du maître (33) holographique et avant la superposition dans le matériau d'enregistrement (31) holographique, dans lequel les modulateurs spatiaux de lumière (13 - 15) sont disposés les uns par rapport aux autres et le regroupement de faisceaux est exécuté de telle sorte que précisément une des nombreuses longueurs d'ondes est associée à chacun des pixels de l'hologramme individualisé.

2. Procédé selon la revendication 1, **caractérisé en ce que** la lumière est produite sous la forme d'un faisceau de lumière polychrome présentant une forme de bande ou de ligne.

3. Procédé selon la revendication 1 ou 2, **caractérisé en ce que** la lumière de plusieurs longueurs d'ondes est produite sous la forme d'un faisceau de lumière incidente (11), regroupé de manière colinéaire, de plusieurs faisceaux de lumière (6 - 8) polarisés monochromes.

4. Procédé selon l'une quelconque des revendications 1 à 3, **caractérisé en ce que** les nombreux faisceaux de lumière monochromes sont guidés au moyen d'éléments optiques (9, 10, 16, 18) dichroïques et au moyen de séparateurs de faisceaux (17, 19) dépendant de la polarisation sur les modulateurs spatiaux de lumière (13 - 15) et sont regroupés de manière colinéaire en un faisceau de lumière d'éclairage (20).

5. Procédé selon l'une quelconque des revendications 1 à 4, **caractérisé en ce qu'**un déplacement linéaire par translation d'un système (41) optique est provoqué afin d'atteindre un guidage de faisceau à balayage simultané des faisceaux de lumière (6' - 8') monochromes par l'intermédiaire des modulateurs spatiaux de lumière (13 - 15) correspondants.

6. Procédé selon la revendication 5, **caractérisé en ce que** le système (41) optique comprend une unité d'individualisation (1, 1', 1"), qui comprend les modulateurs spatiaux de lumière (13 - 15) et une optique d'amenée et de regroupement (21) servant à diriger les faisceaux de lumière (6' - 8') monochromes sur les modulateurs spatiaux de lumière (13 - 15) et servant à regrouper de manière colinéaire les faisceaux de lumière (6" - 8") modulés monochromes en le faisceau de lumière d'éclairage (20).

7. Procédé selon l'une quelconque des revendications 1 à 4, **caractérisé en ce qu'**un balayage des modulateurs spatiaux de lumière (13 - 15) est provoqué par un pivotement d'un miroir de déviation (52), qui peut tourner autour d'un axe de rotation de miroir se trouvant dans le plan de miroir.

8. Procédé selon la revendication 7, **caractérisé en ce qu'**un miroir de compensation est disposé à distance par rapport au miroir de déviation (52) de telle sorte qu'il est tourné selon un angle relatif fixé dans le plan de rotation du miroir de déviation (52) par rapport à l'orientation dans des plans parallèles par rapport au miroir de déviation (52) et qu'il est tourné en conservant la distance et l'angle relatif conjointement avec le miroir de déviation (52) autour de l'axe de rotation de miroir de ce dernier, dans lequel le faisceau de lumière incidente polychrome est dirigé par l'intermédiaire du miroir de déviation (52), du miroir de compensation et d'une optique de reproduction sur l'unité d'individualisation (1, 1', 1") et le faisceau de lumière d'éclairage est guidé par l'intermédiaire de l'optique de reproduction, du miroir de compensation et du miroir de déviation (52).

9. Dispositif (30 ; 50) servant à fabriquer un hologramme individualisé coloré, comprenant une source de lumière (2), qui fournit de la lumière de plusieurs longueurs d'ondes différentes,
une unité d'individualisation (1, 1', 1"), qui module spatialement la lumière de manière séparée selon des longueurs d'ondes,
dans lequel la lumière modulée est guidée de manière optique de telle sorte que la lumière est au moins en partie diffractée et/ou réfléchie au niveau d'un maître (33) holographique et est superposée à la lumière modulée non diffractée et/ou non réfléchie dans l'un matériau d'enregistrement (31) holographique de telle sorte qu'un modèle d'interférence représentant l'hologramme individualisé polychrome se forme et que l'hologramme individualisé polychrome est mémorisé,
**caractérisé en ce**
**que** l'unité d'individualisation (1, 1', 1") comprend plusieurs modulateurs spatiaux de lumière (13 - 15) et une optique d'amenée et de regroupement (21),
dans lequel un modulateur spatial de lumière propre est associé à chacune des nombreuses longueurs d'ondes de la lumière, dans lequel l'optique d'amenée et de regroupement (21) est réalisée pour diriger des faisceaux de lumière (6' - 8') monochromes sur les modulateurs spatiaux de lumière (13 - 15) associés aux longueurs d'ondes respectives, qui modulent simultanément de manière individuelle les faisceaux de lumière (6' - 8') monochromes correspondants selon des modèles de pixels à longueurs d'ondes correspondants, et pour regrouper de manière colinéaire les faisceaux de lumière (6" - 8") modulés monochromes en un faisceau de lumière d'éclairage (20) et les modulateurs spatiaux de lumière (13 - 15) sont orientés les uns par rapport aux autres et sont pilotés de telle sorte que le regroupement de faisceaux est exécuté de telle sorte que précisément une des nombreuses longueurs d'ondes est associée à chacun des pixels de l'hologramme individualisé.

10. Dispositif (30 ; 50) selon la revendication 9, **caractérisé en ce que** la source de lumière (2) est une source de lumière à bandes polychrome, qui produit un faisceau de lumière incidente (11) polychrome présentant une forme de bande ou de ligne.

11. Dispositif (30 ; 50) selon la revendication 9 ou 10, **caractérisé en ce que** l'optique d'amenée et de regroupement (21) comprend des éléments (9, 10, 16, 18) optiques dichroïques et des séparateurs de faisceaux (17, 19) dépendant de la polarisation, de préférence deux séparateurs de faisceaux (16, 18) dichroïques et deux cubes séparateurs de faisceaux (17, 19) de polarisation, et de plus de préférence un cube à prisme X (23) dichroïque.

12. Dispositif (30 ; 50) selon la revendication 9 ou 10, **caractérisé en ce que** l'optique d'amenée et de regroupement (21) comprend un cube à prisme X (23) dichroïque, et **en ce que** les modulateurs spatiaux de lumière (13 - 15) sont disposés au niveau de trois côtés du cube à prisme X (23) dichroïque.

13. Dispositif (30 ; 50) selon l'une quelconque des revendications 9 à 12, **caractérisé par** une unité de translation afin de déplacer un système (41) optique de manière linéaire dans une direction (22) afin de provoquer simultanément un balayage de tous les modulateurs spatiaux de lumière (13 - 15) par les faisceaux de lumière (6' - 8') monochromes correspondants.

14. Dispositif (30 ; 50) selon la revendication 13, **caractérisé en ce que** le système (41) optique comprend l'unité d'individualisation (1, 1', 1"), dans lequel un miroir de déviation (52) est disposé par rapport à l'unité d'individualisation (1, 1', 1") et par rapport au matériau d'enregistrement (31) holographique, qui est monté de manière à pouvoir tourner autour d'un axe de rotation de miroir (51) se trouvant dans le plan de miroir, dans lequel la lumière non modulée peut être guidée par l'intermédiaire du miroir de déviation (52) sur l'unité d'individualisation (1, 1', 1") et la lumière modulée est guidée par l'intermédiaire du miroir de déviation (52) sur le matériau de reproduction, dans lequel une rotation du miroir de déviation (52) provoque un balayage des modulateurs spatiaux de lumière (13 - 15).

15. Dispositif (30 ; 50) selon la revendication 14, **caractérisé en ce qu'**un miroir de compensation (61) est disposé de manière espacée par rapport au miroir de déviation (52) de telle sorte qu'il est tourné selon un angle relatif fixé par rapport à une orientation dans un plan parallèle par rapport au miroir de déviation (52) dans le plan de rotation du miroir de déviation (52) et peut être tourné en conservant la distance (63) et l'angle relatif conjointement avec le miroir de déviation (52) autour de l'axe de rotation de miroir de ce dernier, dans lequel le faisceau de lumière incidente (11) polychrome est dirigé par l'intermédiaire du miroir de déviation (52), du miroir de compensation (61) et d'une optique de reproduction (63) sur l'unité d'individualisation (1, 1', 1") et le faisceau de lumière d'éclairage (20) modulé est guidé par l'intermédiaire de l'optique de reproduction (63), du miroir de compensation (61) et du miroir de déviation (52).

16. Dispositif (30 ; 50) selon l'une quelconque des revendications 9 à 15, **caractérisé en ce que** le matériau d'enregistrement (31) peut être guidé en reposant au niveau d'un tambour (32) cylindrique,
et **en ce que** le tambour (32) est couplé à un système d'entraînement de tambour afin de faire tourner le tambour (32) autour d'un axe de rotation de tambour lors du balayage du maître (33) holographique.
